# EUROPÄISCHE PATENTSCHRIFT

(11) **EP 0 849 488 B1**
(45) Veröffentlichungstag und Bekanntmachung des Hinweises auf die Patenterteilung: **14.03.2001**
(21) Anmeldenummer: 97121922.5
(22) Anmeldetag: 12.12.1997
(51) Int. Cl.: F16D 69/00, F16D 66/02

(54) **Bremsbacke**
Brake pad
Patin de frein

(30) Priorität: 19.12.1996 DE 19652778
(43) Veröffentlichungstag der Anmeldung: 24.06.1998
(73) Patentinhaber: TMD Friction GmbH, 51381 Leverkusen (DE)
(72) Erfinder: Ervens, Ludwig, 51519 Odenthal (DE); Hoffrichter, Wolfgang, 50676 Köln (DE); Lopez-Florez, Pedro José, 51399 Burscheid (DE); Hüner, Ronald, Dr., 51375 Leverkusen (DE)
(74) Vertreter: Dallmeyer, Georg, Dipl.-Ing.

(56) Entgegenhaltungen:
- EP-A- 0 621 414
- EP-A- 0 687 829
- EP-A- 0 747 610
- DE-A- 1 555 973
- FR-A- 1 059 532
- FR-A- 2 532 021

## Beschreibung

Die Erfindung betrifft eine Bremsbacke nach dem Oberbegriff des Anspruchs 1.

Es sind Bremsbacken bekannt, die aus einem Belagträger und einem Reibbelag bestehen, sowie aus einer zwischen dem Reibbelag und dem Belagträger angeordneten Zwischenschicht als Dämpfungselement zur Vermeidung von Reibungsquietschen. Mit einer solchen Zwischenschicht lassen sich Resonanzschwingungen, die beim Bremsen auftreten dämpfen. Eine solche Dämpfungsschicht ist beispielsweise aus der EP-A-0 621 414 bekannt.

Desweiteren ist es bekannt, in Bremsanlagen elektrische oder mechanische Verschleißanzeiger vorzusehen. Da derartige Systeme lediglich einen Verschleißanzeiger pro Bremssattel vorsehen, kann es geschehen, daß ein Bremsbelag bereits mit der Belagträgerplatte an einer Bremsscheibe anliegt, während auf der Seite auf der der Verschleißanzeiger angeordnet ist, der Bremsbelag für eine Warnung noch nicht genügend verschlissen ist.

Abgesehen von dem hohen konstruktiven Aufwand für derartige Verschleißanzeiger besteht ferner das Problem, daß derartige Verschleißwarneinrichtungen nicht nachrüstbar sind.

Die FR-A 1059532 beschreibt einen Reibbelag mit einer Reibbelagschicht mit hohem Reibungskoeffizienten, einer Zwischenschicht aus einem Material mit einem geringen Reibkoeffizienten, die ein Alarmgeräusch erzeugt, sowie eine weitere Schicht, die keine besonderen Reibeigenschaften aufweist und lediglich dazu dient, die erforderliche Belagstärke zu erreichen. Diese Schicht ist keine Dämpfungsschicht, um das Reibungsquietschen zu unterdrücken. Der aus diesem Dokument bekannte Bremsbelag weist keinen Belagträger aus Metall auf. Es existiert keine Dämpfungsschicht.

Die FR-A 2532021 beschreibt eine Materialzusammensetzung für eine geräuschdämpfende Zwischenschicht, mit deren Hilfe ein Reibbelag für Eisenbahnbremsen auf einer Trägerplatte verklebt werden kann. Die Materialzusammensetzung ist ausschließlich als Dämpfungsschicht offenbart, und zwar sind in der Materialzusammensetzung Stoffe enthalten, die als geräuschbildende Füllstoffe geeignet wären, allerdings ist nicht offenbart, daß diese Stoffe in einer Weise zugesetzt sind, daß ein Alarmgeräusch erzeugt werden kann.

Der Erfindung liegt die Aufgabe zugrunde, eine Bremsbacke der eingangs genannten Art zu schaffen, die eine kostengünstige Verschleißwarnung ermöglicht und die bei jedem Fahrzeug nachrüstbar ist.

Zur Lösung dieser Aufgabe dienen die Merkmale des Anspruchs 1.

Die Erfindung sieht in vorteilhafter Weise vor, daß die zwischen Reibbelag und Belagträger angeordnete Zwischenschicht aus einer Materialmischung besteht, die einerseits das Reibungsquietschen im Bremsbetrieb dämpfen kann und andererseits bei Erreichen der Verschleißgrenze ein Alarmgeräusch erzeugen kann.

Die geräuscherzeugenden Füllstoffe sind als Feststoffpartikel mit einer Korngröße im Bereich zwischen ca. 10 und 300 µm zugesetzt.

Eine solche Bremsbacke kann bei jedem Fahrzeug eingesetzt werden, ohne daß Umrüstmaßnahmen am Fahrzeug erforderlich sind. Die Zwischenschicht erfüllt zugleich die Funktion, das Reibungsquietschen im Bremsbetrieb zu dämpfen und bei Erreichen der Verschleißgrenze ein Alarmgeräusch zu erzeugen, wodurch der Fahrer eines Fahrzeuges dazu veranlaßt wird, die Bremsanlage überprüfen zu lassen.

Vorzugsweise ist vorgesehen, daß die Zwischenschicht ein aus Körperschall bestehendes Alarmgeräusch erzeugt. Derartige tieffrequente Geräusche können auch bei guter Fahrzeuginnenraumisolierung deutlich im Inneren eines Fahrzeuges wahrgenommen werden.

Die Zusammensetzung der Zwischenschicht kann derart sein, daß mit zunehmenden Verschleiß der Zwischenschicht ein in der Lautstärke ansteigendes Alarmgeräusch erzeugt wird.

Die Zwischenschicht kann aus folgender Materialmischung in Gew.% bestehen:

| | |
|---|---|
| Harze | 0-40%, vorzugsweise 5-15% |
| Elastomere | 0-40%, vorzugsweise 5-15% |
| Metalle | 0-60%, vorzugsweise 25-40% |
| Fasern | 0-40%, vorzugsweise 15-25% |
| Füllstoffe | 2-80%, vorzugsweise 20-30%. |

Die Zwischenschicht kann aus zwei separaten aufeinander folgenden Schichten bestehen, so daß auf den Reibbelag zunächst eine das Alarmgeräusch erzeugende und anschließend eine das Reibungsquietschen dämpfende Schicht, an den Belagträger angrenzende Schicht folgt.

Alternativ kann die Zwischenschicht derart aufgebaut sein, daß auf den Reibbelag zunächst eine das Reibungsquietschen dämpfende und anschließend die das Alarmgeräusch erzeugende Schicht, an dem Belagträger angrenzende Schicht folgt.

Die das Alarmgeräusch erzeugende Schicht weist vorzugsweise folgende Zusammensetzung in Gew.% auf:

| | |
|---|---|
| Harze | ca. 5-30% |
| Elastomere | ca. 2- 5% |
| Metalle | ca. 10-30% |
| Fasern | ca. 1-10% |
| Füllstoffe | ca. 30-60%. |

Die das Reibungsquietschen dämpfende Schicht weist vorzugsweise folgende Zusammensetzung in Gew.% auf:

| | |
|---|---|
| Harze | 2-25% |
| Elastomere | 20-40% |
| Metalle | 0-20% |
| Fasern | 0-30% |
| Füllstoffe | 10-40% |
| Korrosionsschutzmittel | 0- 2%. |

Als geräuscherzeugende Füllstoffe werden beispielsweise Leichtmetalloxide, insbesondere calzinierte Aluminiumoxide, Schwermetalloxide, Silikate, Erze, Kokse und/oder anorganische Fasern verwendet.

Im folgenden werden unter Bezugnahme auf die Zeichnungen Ausführungsbeispiele der Erfindung näher erläutert.

Es zeigen:
- Fig. 1: eine Ansicht einer Bremsbacke für eine Scheibenbremse, und
- Fig. 2: einen Querschnitt entlang der Linie II-II, und
- Fig. 3: eine Seitenansicht einer Bremsbacke für eine Trommelbremse.

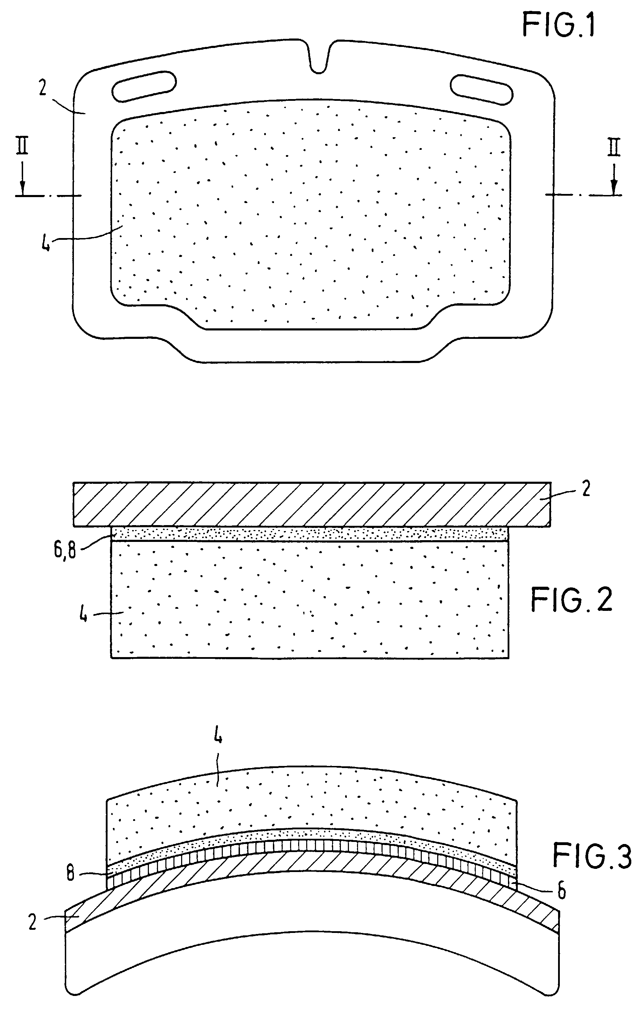

Die in Fig. 1 gezeigte Bremsbacke für eine Teilbelagscheibenbremse besteht aus einer Belagträgerplatte 2, auf die eine Zwischenschicht 6,8 und ein Reibbelag 4 aufgeklebt sind.

Die Zwischenschicht 6,8 kann als vorgepreßte Platte vorkonfektioniert sein, um dann mit dem Reibmaterial des Reibbelages gemeinsam auf die Belagträgerplatte 2 gepreßt zu werden.

Alternativ besteht die Möglichkeit, die Materialmischung der Zwischenschicht 6,8 als homogene Mischung oder in einer bestimmten Reihenfolge in das Preßnest einzubringen und dann gemeinsam mit dem Reibmaterial des Reibbelages zu verpressen. Die Zwischenschicht erfüllt dabei auch die Kleberfunktion, die den Reibbelag 4 mit der Belagträgerplatte 2 verbindet.

Die Zwischenschicht 6,8 hat bei vorhandenem Reibbelag die Funktion, das Reibungsquietschen als Dämpfungselement zu reduzieren oder zu eliminieren.

Ist der Reibbelag 4 verschlissen, erzeugt die Zwischenschicht 6,8 ein Alarmgeräusch, das den Fahrer auf den Abnutzungszustand der Bremsbacke hinweist. Das Alarmgeräusch wird dadurch erzeugt, daß der Reibfilm zwischen Bremsbacke und der Bremsscheibe oder Bremstrommel durchbrochen wird und gezielt Schwingungen erzeugt werden, die im Körperschallbereich liegen. Solche tieffrequenten Geräusche haben den Vorteil, auch bei gut isolierten Fahrzeuginnenräumen in das Fahrzeuginnere übertragen zu werden, während sie außerhalb des Fahrzeugs nicht wahrgenommen werden können.

Eine solche zugleich das Reibungsquietschen dämpfende und bei Erreichen der Verschleißgrenze ein Alarmgeräusch erzeugende Zwischenschicht hat den Vorteil, daß aufwendige Verschleißwarneinrichtungen nicht mehr benötigt werden. Insbesondere besteht der Vorteil darin, daß eine solche Zwischenschicht in jeder beliebigen Bremsbacke verwendet werden kann, so daß eine derartige Verschleißwarneinrichtung für alle Fahrzeuge nachrüstbar ist. Die Materialmischung der Zwischenschicht 6,8 hat beispielsweise die in der nachfolgenden Tabelle angegebene Zusammensetzung:

| **Inhaltsstoffe** | **Beispiel** | **Gewichts%** | | **vorzugsweise** |
|---|---|---|---|---|
| | | **min** | **max** | |
| Harz | Phenolharz Epoxidharz | 0 | 40 | 5-15 |
| Elastomer | NBR, SBR, IR Silikonkautschuk | 0 | 40 | 5-15 |
| Metalle | Messingspäne Stahlwolle | 0 | 60 | 25-40 |
| Fasern | Mineralfasern, Organische Fasern | 0 | 40 | 15-25 |
| Füllstoffe | Gesteinsmehle Tonerden | 2 | 80 | 20-30 |

Die Dicke der Zwischenschicht beträgt ca. 2 bis 4 mm. Bevorzugt wird eine einteilige Zwischenschicht, die beide Funktionen in sich vereinigt.

Alternativ kann die Zwischenschicht zweiteilig ausgeführt werden, wobei auf den Reibbelag 4 vorzugsweise zunächst die bei Erreichen der Verschleißgrenze geräuscherzeugende Zwischenschicht 8 und dann eine das Reibungsquietschen dämpfende Schicht 6 an den Belagträger 2 angrenzend aufeinanderfolgt.

Die Zusammensetzung der geräuscherzeugenden Zwischenschicht 8 ergibt sich aus folgender Tabelle :

| | |
|---|---|
| Kautschuk | 2- 5 Gew.% |
| Harze | 5-30 Gew.% |
| Fasern | 1-10 Gew.% |
| Füllstoffe | 30-60 Gew.% |
| Metall | 10-30 Gew.%. |

Die als Dämpfungselement verwendete Zwischenschicht 6 ist wie folgt zusammengesetzt:

| | |
|---|---|
| Kautschuk | 20-40 Gew.% |
| Harze | 2-25 Gew.% |
| Fasern | 0-30 Gew.% |
| Korrosionsschutz | 0- 2 Gew.%. |
| Füllstoffe | 10-40 Gew.%. |

Bei der als Dämpfungselement dienende Zwischenschicht 6 muß das E-Modul höher sein als der des Reibbelages 4. Dies wird durch einen hohen Kautschukanteil erreicht.

Beide Zwischenschichten 6,8 sind von ihrem Reibverhalten so ausgelegt, daß sie zumindest noch Notbremsfunktionen erfüllen.

Zur Geräuscherzeugung in der Zwischenschicht 6,8 sind folgende Füllstoffe insbesondere geeignet:

### Leichtmetalloxide, wie Aluminiumoxide insbesondere calzinierte Aluminiumoxide

- z.B.: Poliertonerden Bikorit

### Schwermetalloxide

- z.B.: Eisenoxide Chromoxide Zirkonoxide

### Silikate

- z.B.: Aluminiumsilikate (Korund), Kaolin Zirkonsilikate Quarz

### Erze

- z.B.: Chromeisenstein

### Kokse

### Fasern

- z.B.: Künstliche Mineralfaser Glasfaser

Die durchschnittliche Korngröße der geräuscherzeugenden Partikel beträgt ca. 120 µm, kann aber in dem Bereich zwischen 10 und 300 Am, also von pulverig bis grobkörnig, liegen. Die Geräuschintensität kann über die Menge der geräuscherzeugenden Partikel in der Zwischenschicht beeinflußt werden.

Während Fig. 2 eine Bremsbacke für eine Scheibenbremse zeigt, die eine einheitliche Zwischenschicht 6,8 aufweist, zeigt Fig. 3 eine Bremsbacke für eine Trommelbremse mit einer zweiteiligen Zwischenschicht, bei der die das Alarmgeräusch erzeugende Schicht 8 über der das Reibungsquietschen dämpfenden Schicht 6 angeordnet ist.

## Patentansprüche

1. Bremsbacke, bestehend aus einem Belagträger (2) und einem Reibbelag (4), sowie aus einer zwischen dem Reibbelag (4) und dem Belagträger (2) angeordneten Zwischenschicht (6,8) als Dämpfungselement zur Vermeidung von Reibungsquietschen,
**dadurch gekennzeichnet,**
daß die Zwischenschicht (6,8) aus einer einerseits das Reibungsquietschen im Bremsbetrieb dämpfenden und andererseits bei Erreichen der Verschleißgrenze ein Alarmgeräusch erzeugenden Materialmischung besteht, wobei der Materialmischung geräuscherzeugende Füllstoffe in Form von Feststoffpartikeln mit einer Korngröße im Bereich zwischen ca. 10 und 300 µm zugesetzt sind.

2. Bremsbacke nach Anspruch 1, dadurch gekennzeichnet, daß die Materialmischung der Zwischenschicht (6,8) ein mit zunehmenden Verschleiß der Zwischenschicht (6,8) lauteres Alarmgeräusch erzeugt.

3. Bremsbacke nach Anspruch 1 oder 2, dadurch gekennzeichnet, daß in der Materialmischung der Zwischenschicht (6,8) als geräuscherzeugende Füllstoffe eine Kombination von mehreren der folgenden Füllstoffe Leichtmetalloxide, insbesondere calzinierte Aluminiumoxide, Schwermetalloxide, Silikate, Erze, Kokse und/oder anorganische Fasern enthalten sind.

4. Bremsbacke nach Anspruch 1 bis 3, dadurch gekennzeichnet, daß die Zwischenschicht (6,8) aus folgender Materialmischung in Gew.% besteht
| | | | |
|---|---|---|---|
| Harze | 0-40%, | vorzugsweise | 5-15% |
| Elastomere | 0-40%, | vorzugsweise | 5-15% |
| Metalle | 0-60%, | vorzugsweise | 25-40% |
| Fasern | 0-40%, | vorzugsweise | 15-25% |
| Füllstoffe | 2-80%, | vorzugsweise | 20-30%. |

5. Bremsbacke nach Ansprüche 1 bis 4, dadurch gekennzeichnet, daß die Zwischenschicht (6,8) aus zwei separaten aufeinanderfolgenden Schichten besteht, wobei auf den Reibbelag zunächst eine das Alarmgeräusch erzeugende Schicht (8) und anschließend eine das Reibungsquietschen dämpfende, an den Belagträger (2) angrenzende Schicht (6) folgt.

6. Bremsbacke nach Anspruch 1 bis 4, dadurch gekennzeichnet, daß die Zwischenschicht (6,8) aus zwei separaten aufeinanderfolgenden Schichten (6,8) besteht, so daß auf den Reibbelag (4) zunächst eine das Reibungsquietschen dämpfende Schicht (6) und anschließend eine das Alarmgeräusch erzeugende angrenzende Schicht (8) folgt.

7. Bremsbacke nach einem der Ansprüche 5 oder 6, dadurch gekennzeichnet, daß die das Alarmgeräusch erzeugende Schicht (8) folgende Zusammensetzung in Gew.% aufweist
| | |
|---|---|
| Harze | ca. 5-30% |
| Elastomere | ca. 2- 5% |
| Metalle | ca. 10-30% |
| Fasern | ca. 1-10% |
| Füllstoffe | ca. 30-60%. |

8. Bremsbacke nach einem der Ansprüche 5 bis 7, dadurch gekennzeichnet, daß die das Reibungsquietschen dämpfende Schicht (6) folgende Zusammensetzung in Gew.% aufweist:
| | |
|---|---|
| Harze | 2-25% |
| Elastomere | 20-40% |
| Metalle | 0-20% |
| Fasern | 0-30% |
| Füllstoffe | 10-40% |
| Korrosions-schutzmittel | 0- 2% |

9. Bremsbacke nach einem der Ansprüche 1 bis 8, dadurch gekennzeichnet, daß die Zwischenschicht den Reibbelag (4) mit der Belagträgerplatte (2) verklebt.

## Claims

1. A brake jaw consisting of a lining support member (2) and a friction lining (4), as well as an intermediate layer (6, 8) arranged between the friction lining (4) and the lining support member (2) and acting as a damping layerto avoid squealing caused by friction,
characterized in
that the intermediate layer (6, 8) consists of a material mixture that is adapted, on the one hand, to damp friction squealing during braking and, on the other hand, to generate an acoustic alarm signal when reaching the wear limit, the material mixture comprising noise-generating fillers added as solid particles with a grain size ranging from about 10 to 300 µm.

2. The brake jaw of claim 1, wherein the material mixture of the intermediate layer (6, 8) causes an acoustic alarm signal increasing in loudness with the wear of the intermediate layer (6,8).

3. The brake jaw of claim 1 or 2, wherein the material mixture of the intermediate layer (6, 8) comprises as the noise-generating fillers a combination of a plurality of the following fillers: light metal oxides, in particular calcinated aluminum oxides, heavy metal oxides, silicates, ores, cokes and/or anorganic fibers.

4. The brake jaw of one of claims 1 to 3, wherein the intermediate layer (6, 8) consists of the following material mixture in percent by weight:
| | |
|---|---|
| resins | 0 - 40%, preferably 5 - 15% |
| elastomers | 0 - 40%, preferably 5 - 15% |
| metals | 0 - 60%, preferably 25 -40% |
| fibers | 0 - 40%, preferably 15 - 25% |
| fillers | 2 - 80%, preferably 20 - 30%. |

5. The brake jaw of one of claims 1 to 4, wherein the intermediate layer (6, 8) is composed of two separate subsequent layers (6, 8) so that the friction lining (4) is first followed by a layer (6) damping friction squealing and then by a layer (8) adjacent the lining support (2) and generating the acoustic alarm signal.

6. The brake jaw of one of claims 1 to 4, wherein the intermediate layer (6, 8) consists of two separate subsequent layers (6, 8) such that the friction lining (4) is first followed by the layer (6) damping friction squealing and then by an adjacent layer (8) generating the acoustic alarm signal.

7. The brake jaw of claim 5 or 6, wherein the layer (8) generating the acoustic alarm signal has the following composition in percent by weight:
| | |
|---|---|
| resins | approx. 5 - 30% |
| elastomers | approx. 2 - 5% |
| metals | approx. 10 - 30% |
| fibers | approx. 1 - 10% |
| fillers | approx. 30 - 60%. |

8. The brake jaw of claim 5 to 7, wherein the layer (6) damping the friction squealing has the following composition in percent by weight:
| | |
|---|---|
| resins | 2 - 25% |
| elastomers | 20 - 40% |
| metals | 0 - 20% |
| fibers | 0 - 30% |
| fillers | 10 - 40% |
| anticorrosive agents | 0 - 2%. |

9. The brake jaw of one of claims 1 to 8, wherein the intermediate layer adheres the friction lining (4) to the lining support plate (2).

## Revendications

1. Patin de frein, se composant d'un support de garniture (2) et d'une garniture de friction (4), ainsi que d'une couche intermédiaire (6, 8) disposée entre la garniture de friction (4) et le support de garniture (2) comme élément d'amortissement pour éviter un grincement de frottement,
caractérisé en ce que la couche intermédiaire (6, 8) se compose d'un mélange de matières qui, d'une part, amortit le grincement de frottement lors du freinage et d'autre part produit un bruit d'avertissement lorsqu'une limite d'usure est atteinte, des charges génératrices de bruit sous forme de particules de matière solides ayant une grosseur de grain dans la plage comprise entre environ 10 et 300 µm étant ajoutées au mélange de matières.

2. Patin de frein selon la revendication 1, caractérisé en ce que le mélange de matières de la couche intermédiaire (6, 8) produit un bruit d'avertissement plus fort à mesure que l'usure de la couche intermédiaire (6, 8) augmente.

3. Patin de frein selon la revendication 1 ou 2, caractérisé en ce que, dans le mélange de matières de la couche intermédiaire (6, 8), sont contenues comme charges génératrices de bruit une combinaison de plusieurs des charges suivantes : oxydes de métaux légers, en particulier oxyde d'aluminium calciné, oxydes de métaux lourds, silicates, minerais, coke et/ou fibres minérales.

4. Patin de frein selon revendication 1 à 3, caractérisé en ce que la couche intermédiaire (6, 8) se compose du mélange de matières suivant en % en poids :
| | | |
|---|---|---|
| Résines | 0 - 40%, | de préférence 5 - 15% |
| Elastomères | 0 - 40%, | de préférence 5 - 15% |
| Métaux | 0 - 60%, | de préférence 25 - 40% |
| Fibres | 0 - 40%, | de préférence 15 - 25% |
| Charges | 2 - 80%, | de préférence 20 - 30% |

5. Patin de frein selon les revendications 1 à 4,
caractérisé en ce que la couche intermédiaire (6, 8) se compose de deux couches séparées successives, étant entendu que sur la garniture de friction fait suite tout d'abord une couche (8) produisant le bruit d'avertissement et, immédiatement après, une couche (6), adjacente au support de garniture (2), qui amortit le grincement de frottement.

6. Patin de frein selon revendication 1 à 4, caractérisé en ce que la couche intermédiaire (6, 8) se compose de deux couches (6, 8) séparées successives de telle sorte que sur la garniture de friction (4) fait suite tout d'abord une couche (6) qui amortit le grincement de frottement et, immédiatement après, une couche (8) adjacente produisant le bruit d'avertissement.

7. Patin de frein selon l'une des revendications 5 ou 6,
caractérisé en ce que la couche (8) produisant le bruit d'avertissement présente la composition suivante en % en poids :
| | | |
|---|---|---|
| Résines | environ | 5 - 30% |
| Elastomères | environ | 2 - 5% |
| Métaux | environ | 10 - 30% |
| Fibres | environ | 1 - 10% |
| Charges | environ | 30 - 60% |

8. Patin de frein selon l'une des revendications 5 à 7,
caractérisé en ce que la couche (6) qui amortit le grincement de frottement présente la composition suivante en % en poids :
| | |
|---|---|
| Résines | 2 - 25% |
| Elastomères | 20 - 40% |
| Métaux | 0 - 20% |
| Fibres | 0 - 30% |
| Charges | 10 - 40% |
| Agent de protection contre la corrosion | 0 - 2% |

9. Patin de frein selon l'une des revendications 1 à 8, caractérisé en ce que la couche intermédiaire assure le collage de la garniture de frein (4) avec la plaque support de garniture (2).
